# EUROPEAN PATENT APPLICATION

(11) **EP 4 598 132 A1**
(43) Date of publication of application: **06.08.2025**
(21) Application number: 22959848.7
(22) Date of filing: 27.09.2022
(51) Int. Cl.: H04W 40/12

(54) **RELAY USER EQUIPMENT (UE) SELECTION METHOD AND DEVICE FOR UE-TO-UE RELAY SCENARIO**

(71) Applicant: Beijing Xiaomi Mobile Software Co., Ltd., Beijing 100085 (CN)
(72) Inventor: JIANG, Xiaowei, Beijing 100085 (CN)
(74) Representative: Stöckeler, Ferdinand
(86) International application number: PCT/CN2022/121814
(87) International publication number: WO 2024/065199

(57) **Abstract**

A relay user equipment (UE) selection method for a UE-to-UE relay scenario. The method is executed by a first UE, and the method comprises: receiving at least one first message sent by at least one relay UE; acquiring a sidelink reference signal received power (SL-RSRP) and/or a sidelink discovery reference signal received power (SD-RSRP) between the first UE and the at least one relay UE, respectively; and selecting a target relay UE from the at least one relay UE according to the acquired SL-RSRP or SD-RSRP and a preconfigured threshold. The first UE can select a target relay UE from the at least one relay UE according to the acquired SL-RSRP or SD-RSRP and a preconfigured threshold, thereby solving the problem that the first UE cannot select an appropriate target relay UE from a plurality of relay UEs in a UE-to-UE relay scenario.

## Description

### TECHNICAL FIELD

The present disclosure relates to the field of communication technologies, and in particular relates to a method and a device for selecting a relay user equipment (UE) in a UE-to-UE relay scenario.

### BACKGROUND

In the related art, a user equipment (UE) A may not be directly connected to a UE B, but connected to the UE B through a relay of a UE C. The UE C providing a relay function is a relay UE, and the above connected UEs communicate with each other through a sidelink unicast, and this architecture is referred to as a U2U (UE to UE) relay. In a U2U scenario, multiple relay UEs that may provide the relay function for the UE A and the UE B are existed at the same time, and then a suitable target relay UE needs to be determined from the multiple relay UEs, such that the UE A and the UE B may communicate through the target relay UE.

However, there is a lack of effective means for determining a suitable relay UE in the U2U scenario.

### SUMMARY

Embodiments of the present disclosure provide a method and a device for selecting a relay user equipment (UE) in a UE-to-UE relay scenario, which may be applied to Internet of vehicles, such as a vehicle to everything (V2X) communication, a long term evolution-vehicle (LTE-V) technology, a vehicle to vehicle (V2V) communication and the like, or may be used in the fields of intelligent driving, intelligent connected vehicles and the like. A target relay UE is selected from at least one relay UE according to sidelink reference signal receiving power (SL-RSRP) or sidelink-discovery reference signal receiving power (SD-RSRP) obtained and a preconfigured threshold, thereby solving a problem that a first UE may not select a suitable target relay UE from multiple relay UEs in a UE-to-UE relay scenario.

According to a first aspect of embodiments of the present disclosure, there is provided a method for selecting a relay user equipment (UE) in a UE-to-UE relay scenario, performed by a first UE, including: receiving at least one first message sent by at least one relay UE; obtaining sidelink reference signal receiving power (SL-RSRP) and/or sidelink-discovery reference signal receiving power (SD-RSRP) between the first UE and the at least one relay UE; and selecting a target relay UE from the at least one relay UE according to the SL-RSRP or the SD-RSRP obtained and a preconfigured threshold.

In this technical solution, the first UE selects the target relay UE from the at least one relay UE according to the SL-RSRP or the SD-RSRP obtained and the preconfigured threshold, thereby solving a problem that the first UE may not select a suitable target relay UE from multiple relay UEs in the UE-to-UE relay scenario.

In an implementation, selecting the target relay UE from the at least one relay UE according to the SL-RSRP or the SD-RSRP obtained and the preconfigured threshold includes: determining at least one candidate relay UE from the at least one relay UE according to the SL-RSRP or the SD-RSRP obtained and the preconfigured threshold; and selecting one candidate relay UE from the at least one candidate relay UE to determine as the target relay UE.

In an optional implementation, the preconfigured threshold includes a first preconfigured threshold and/or a second preconfigured threshold, in which the first preconfigured threshold is a minimum threshold and the second preconfigured threshold is a maximum threshold.

Optionally, the preconfigured threshold is the first preconfigured threshold; and determining the at least one candidate relay UE from the at least one relay UE according to the SL-RSRP or the SD-RSRP obtained and the preconfigured threshold includes: comparing the SL-RSRP or the SD-RSRP obtained with the first preconfigured threshold, and determining one or more relay UEs satisfying a first candidate relay selection condition from the at least one relay UE; and determining the one or more relay UEs satisfying the first candidate relay selection condition as the at least one candidate relay UE; in which the one or more relay UEs satisfying the first candidate relay selection condition include: one or more relay UEs whose the SL-RSRP or the SD-RSRP with the first UE being greater than or equal to the first preconfigured threshold; or one or more relay UEs whose the SL-RSRP or the SD-RSRP with the first UE being greater than the first preconfigured threshold by at least one hysteresis parameter value.

Optionally, the preconfigured threshold is the second preconfigured threshold; and determining the at least one candidate relay UE from the at least one relay UE according to the SL-RSRP or the SD-RSRP obtained and the preconfigured threshold includes: comparing the SL-RSRP or the SD-RSRP obtained with the second preconfigured threshold, and determining one or more relay UEs satisfying a second candidate relay selection condition from the at least one relay UE; and determining the one or more relay UEs satisfying the second candidate relay selection condition as the at least one candidate relay UE; in which the one or more relay UEs satisfying the second candidate relay selection condition include: one or more relay UEs whose the SL-RSRP or the SD-RSRP with the first UE being less than or equal to the second preconfigured threshold; or one or more relay UEs whose the SL-RSRP or the SD-RSRP with the first UE being less than the second preconfigured threshold by at least one hysteresis parameter value.

Optionally, the preconfigured threshold includes the first preconfigured threshold and the second preconfigured threshold; and determining the at least one candidate relay UE from the at least one relay UE according to the SL-RSRP or the SD-RSRP obtained and the preconfigured threshold includes: comparing the SL-RSRP or the SD-RSRP obtained with the first preconfigured threshold and the second preconfigured threshold, and determining one or more relay UEs satisfying a third candidate relay selection condition from the at least one relay UE; and determining the one or more relay UEs satisfying the third candidate relay selection condition as the at least one candidate relay UE; in which the one or more relay UEs satisfying the third candidate relay selection condition include: one or more relay UEs whose the SL-RSRP or the SD-RSRP with the first UE being greater than or equal to the first preconfigured threshold and less than or equal to the second preconfigured threshold; or one or more relay UEs whose the SL-RSRP or the SD-RSRP with the first UE being greater than the first preconfigured threshold by at least one hysteresis parameter value and less than the second preconfigured threshold by at least one hysteresis parameter value.

In an optional implementation, selecting one candidate relay UE from the at least one candidate relay UE to determine as the target relay UE includes: selecting a candidate relay UE with highest SL-RSRP or SD-RSRP with the first UE from the at least one candidate relay UE to determine as the target relay UE; or randomly selecting one candidate relay UE from the at least one candidate relay UE to determine as the target relay UE.

In an optional implementation, the method further includes: in response to none of the at least one relay UE being the candidate relay UE, selecting a relay UE with highest SL-RSRP or SD-RSRP with the first UE from the at least one relay UE to determine as the target relay UE; or randomly selecting one relay UE from the at least one relay UE to determine as the target relay UE.

In an implementation, the at least one first message sent by the at least one relay UE is at least one notification message broadcast by the at least one relay UE; and the first UE is a proximate user equipment.

In an implementation, the at least one first message sent by the at least one relay UE is at least one discovery solicitation message forwarded by the at least one relay UE; and the first UE is a target remote UE.

In an optional implementation, the method further includes: generating a discovery response message by the target remote UE according to a discovery solicitation message forwarded by the target relay UE; and forwarding the discovery response message by the target remote UE through the target relay UE.

In an implementation, the at least one first message sent by the at least one relay UE is at least one discovery response message forwarded by the at least one relay UE; and the first UE is a source remote UE.

According to a second aspect of embodiments of the present disclosure, there is provided a method for selecting a relay user equipment (UE) in a UE-to-UE relay scenario, performed by a second UE, the second UE being the relay UE in the UE-to-UE relay scenario, including: sending a first message to a first UE, in which the first message is configured to assist the first UE to determine whether to select the second UE as a target relay UE according to sidelink reference signal receiving power (SL-RSRP) or sidelink-discovery reference signal receiving power (SD-RSRP) obtained between the first UE and the second UE, and a preconfigured threshold.

In an implementation, the first message is a notification message broadcasted by the second UE; and the first UE is a proximate user equipment.

In an implementation, the first message is a discovery solicitation message forwarded by the second UE; and the first UE is a target remote UE.

In an implementation, the first message is a discovery response message forwarded by the second UE; and the first UE is a source remote UE.

In this technical solution, the second UE may send the first message to the first UE, such that the first UE may select the target relay UE from the at least one relay UE based on the first message, thereby solving a problem that the first UE may not select a suitable target relay UE from multiple relay UEs in the UE-to-UE relay scenario.

According to a third aspect of embodiments of the present disclosure, there is provided a communication device, including: a transceiver module configured to receive at least one first message sent by at least one relay UE, and obtain sidelink reference signal receiving power (SL-RSRP) and/or sidelink-discovery reference signal receiving power (SD-RSRP) between the first UE and the at least one relay UE; and a processing module configured to select a target relay UE from the at least one relay UE according to the SL-RSRP or the SD-RSRP obtained and a preconfigured threshold. In an implementation, the processing module is specifically configured to determine at least one candidate relay UE from the at least one relay UE according to the SL-RSRP or the SD-RSRP obtained and the preconfigured threshold; and select one candidate relay UE from the at least one candidate relay UE to determine as the target relay UE.

In an optional implementation, the preconfigured threshold includes a first preconfigured threshold and/or a second preconfigured threshold, in which the first preconfigured threshold is a minimum threshold and the second preconfigured threshold is a maximum threshold.

Optionally, the preconfigured threshold is the first preconfigured threshold; and the processing module is specifically configured to compare the SL-RSRP or the SD-RSRP obtained with the first preconfigured threshold, and determine one or more relay UEs satisfying a first candidate relay selection condition from the at least one relay UE; and determine the one or more relay UEs satisfying the first candidate relay selection condition as the at least one candidate relay UE; in which the one or more relay UEs satisfying the first candidate relay selection condition include: one or more relay UEs whose the SL-RSRP or the SD-RSRP with the first UE being greater than or equal to the first preconfigured threshold; or one or more relay UEs whose the SL-RSRP or the SD-RSRP with the first UE being greater than the first preconfigured threshold by at least one hysteresis parameter value.

Optionally, the preconfigured threshold is the second preconfigured threshold; and the processing module is specifically configured to compare the SL-RSRP or the SD-RSRP obtained with the second preconfigured threshold, and determine one or more relay UEs satisfying a second candidate relay selection condition from the at least one relay UE; and determine the one or more relay UEs satisfying the second candidate relay selection condition as the at least one candidate relay UE; in which the one or more relay UEs satisfying the second candidate relay selection condition include: one or more relay UEs whose the SL-RSRP or the SD-RSRP with the first UE being less than or equal to the second preconfigured threshold; or one or more relay UEs whose the SL-RSRP or the SD-RSRP with the first UE being less than the second preconfigured threshold by at least one hysteresis parameter value.

Optionally, the preconfigured threshold includes the first preconfigured threshold and the second preconfigured threshold; and the processing module is specifically configured to compare the SL-RSRP or the SD-RSRP obtained with the first preconfigured threshold and the second preconfigured threshold, and determine one or more relay UEs satisfying a third candidate relay selection condition from the at least one relay UE; and determine the one or more relay UEs satisfying the third candidate relay selection condition as the at least one candidate relay UE; in which the one or more relay UEs satisfying the third candidate relay selection condition include: one or more relay UEs whose the SL-RSRP or the SD-RSRP with the first UE being greater than or equal to the first preconfigured threshold and less than or equal to the second preconfigured threshold; or one or more relay UEs whose the SL-RSRP or the SD-RSRP with the first UE being greater than the first preconfigured threshold by at least one hysteresis parameter value and less than the second preconfigured threshold by at least one hysteresis parameter value.

In an optional implementation, the processing module is specifically configured to select a candidate relay UE with highest SL-RSRP or SD-RSRP with the first UE from the at least one candidate relay UE to determine as the target relay UE; or randomly select one candidate relay UE from the at least one candidate relay UE to determine as the target relay UE.

In an optional implementation, the processing module is specifically configured to, in response to none of the at least one relay UE being the candidate relay UE, select a relay UE with highest SL-RSRP or SD-RSRP with the first UE from the at least one relay UE to determine as the target relay UE; or randomly select one relay UE from the at least one relay UE to determine as the target relay UE.

In an implementation, the at least one first message sent by the at least one relay UE is at least one notification message broadcast by the at least one relay UE; and the first UE is a proximate user equipment.

In an implementation, the at least one first message sent by the at least one relay UE is at least one discovery solicitation message forwarded by the at least one relay UE; and the first UE is a target remote UE.

In an optional implementation, the processing module is further configured to generate a discovery response message by the target remote UE according to a discovery solicitation message forwarded by the target relay UE; and the transceiver module is further configured to forward the discovery response message by the target remote UE through the target relay UE.

In an implementation, the at least one first message sent by the at least one relay UE is at least one discovery response message forwarded by the at least one relay UE; and the first UE is a source remote UE.

According to a fourth aspect of embodiments of the present disclosure, there is provided a communication device, including: a transceiver module configured to send a first message to a first UE, in which the first message is configured to assist the first UE to determine whether to select a second UE as a target relay UE according to sidelink reference signal receiving power (SL-RSRP) or sidelink-discovery reference signal receiving power (SD-RSRP) obtained between the first UE and the second UE, and a preconfigured threshold.

In an implementation, the first message is a notification message broadcasted by the second UE; and the first UE is a proximate user equipment.

In an implementation, the first message is a discovery solicitation message forwarded by the second UE; and the first UE is a target remote UE.

In an implementation, the first message is a discovery response message forwarded by the second UE; and the first UE is a source remote UE.

According to a fifth aspect of embodiments of the present disclosure, there is provided a communication device including a processor which, when invoking a computer program in a memory, performs the method of the first aspect described above.

According to a sixth aspect of embodiments of the present disclosure, there is provided a communication device including a processor which, when invoking a computer program in a memory, performs the method of the second aspect described above.

According to a seventh aspect of embodiments of the present disclosure, there is provided a communication device, including a processor and a memory, in which a computer program is stored in the memory, and the processor is configured to execute the computer program stored in the memory to cause the communication device to perform the method of the first aspect described above.

According to an eighth aspect of embodiments of the present disclosure, there is provided a communication device, including a processor and a memory, in which a computer program is stored in the memory, and the processor is configured to execute the computer program stored in the memory to cause the communication device to perform the method of the second aspect described above.

According to a ninth aspect of embodiments of the present disclosure, there is provided a communication device, including a processor and an interface circuit, in which the interface circuit is configured to receive code instructions and transmit the code instructions to the processor; and the processor is configured to execute the code instructions to cause the device to perform the method of the first aspect described above.

According to a tenth aspect of embodiments of the present disclosure, there is provided a communication device, including a processor and an interface circuit, in which the interface circuit is configured to receive code instructions and transmit the code instructions to the processor; and the processor is configured to execute the code instructions to cause the device to perform the method of the second aspect described above.

According to an eleventh aspect of embodiments of the present disclosure, there is provided a system for selecting a relay UE in a UE-to-UE relay scenario, including a communication device of the third aspect and a communication device of the fourth aspect, or a communication device of the fifth aspect and a communication device of the sixth aspect, or a communication device of the seventh aspect and a communication device of the eighth aspect, or a communication device of the ninth aspect and a communication device of the tenth aspect.

According to a twelfth aspect of embodiments of the present disclosure, there is provided a computer-readable storage medium configured to store instructions for the UE described above that, when executed, cause the UE to perform the method of the first aspect described above.

According to a thirteenth aspect of embodiments of the present disclosure, there is provided a readable storage medium configured to store instructions for the UE described above that, when executed, cause the UE to perform the method of the second aspect described above.

According to a fourteenth aspect of the present disclosure, there is provided a computer program product including a computer program that, when run on a computer, causes the computer to perform the method of the first aspect described above.

According to a fifteenth aspect of the present disclosure, there is provided a computer program product including a computer program that, when run on a computer, causes the computer to perform the method of the second aspect described above.

According to a sixteenth aspect of the present disclosure, there is provided a chip system including at least one processor and an interface, for supporting the UE to implement functions involved in the first aspect, for example, determining or processing at least one of data and information involved in the above method. In a possible design, the chip system further includes a memory configured to store computer programs and data necessary for the UE. The chip system may be composed of chips, or may include chips and other discrete devices.

According to a seventeenth aspect of the present disclosure, there is provided a chip system including at least one processor and an interface, for supporting the UE to implement functions involved in the second aspect, for example, determining or processing at least one of data and information involved in the above method. In a possible design, the chip system further includes a memory configured to store computer programs and data necessary for the UE. The chip system may be composed of chips, or may include chips and other discrete devices.

According to an eighteenth aspect of the present disclosure, there is provided a computer program that, when run on a computer, causes the computer to perform the method of the first aspect described above.

According to a nineteenth aspect of the present disclosure, there is provided a computer program that, when run on a computer, causes the computer to perform the method of the second aspect described above.

### BRIEF DESCRIPTION OF THE DRAWINGS

**In** order to more clearly illustrate embodiments of the present disclosure or the technical solutions in the background, the following description will be given to the accompanying drawings, which are required to be used in embodiments of the present disclosure or the background.
FIG. 1 is an architectural diagram illustrating a communication system provided by an embodiment of the present disclosure;
FIG. 2 is a flow chart illustrating a method for selecting a relay user equipment (UE) in a UE-to-UE relay scenario provided by an embodiment of the present disclosure;
FIG. 3 is a flow chart illustrating another method for selecting a relay UE in a UE-to-UE relay scenario provided by an embodiment of the present disclosure;
FIG. 4 is a flow chart illustrating yet another method for selecting a relay UE in a UE-to-UE relay scenario provided by an embodiment of the present disclosure;
FIG. 5 is a structural block diagram illustrating a communication device provided by an embodiment of the present disclosure;
FIG. 6 is a structural block diagram illustrating another communication device provided by an embodiment of the present disclosure; and
FIG. 7 is a structural block diagram illustrating a chip provided by an embodiment of the present disclosure.

### DETAILED DESCRIPTION

Reference will be made in detail to embodiments of the present disclosure, examples of which are shown in the drawings. The same or similar elements or the elements having the same or similar functions are denoted by the same or similar reference numerals throughout the descriptions. The embodiments described herein with reference to drawings are illustrative, and used to explain the present disclosure. The embodiments shall not be construed to limit the present disclosure. In the description of the present disclosure, a character "/" generally indicates that associated objects have an "or" relationship, unless stated otherwise. For example, A/B may mean A or B. "And/or", which describes an associated relationship of associated objects, means that there may be three relationships. For example, A and/or B may mean that A exists alone, both A and B exist, and B exists alone.

Regarding a U2U (user equipment to user equipment, UE to UE) scenario, there are currently two models of sending a discovery solicitation message, i.e. a model A and a model B. In the model A, one or more relay UEs periodically broadcast a notification message, which carries an address of a target remote UE, and a source remote UE may listen to the notification message. In the model B, one or more relay UEs forward a discovery solicitation message sent by the source remote UE. Regarding the model A, since the source remote UE may receive notification messages from multiple relay UEs, the source remote UE needs to determine a suitable target relay UE from the multiple relay UEs. Regarding the model B, since the target remote UE may receive the discovery solicitation message forwarded by the multiple relay UEs, the target remote UE needs to determine the suitable target relay UE from the multiple relay UEs.

In order to better understand a method and a device for selecting a relay user equipment (UE) in a UE-to-UE relay scenario disclosed in embodiments of the present disclosure, a communication system to which embodiments of the present disclosure are applicable will be described below.

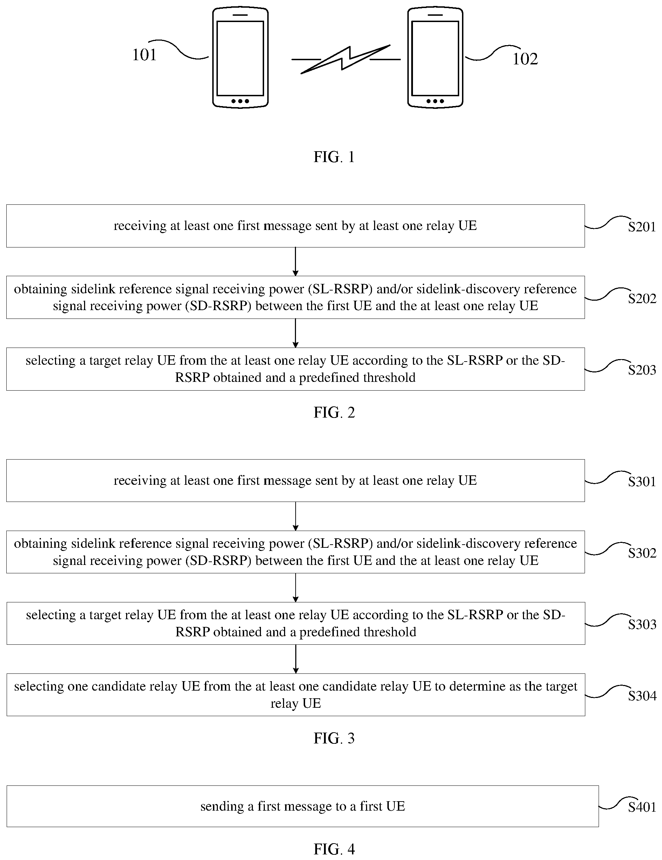

Referring to FIG. 1, which is an architectural diagram illustrating a communication system provided by an embodiment of the present disclosure. The communication system may include, but is not limited to, a first UE and a relay UE. The number and form of devices shown in FIG. 1 are merely for example and do not constitute a limitation to embodiments of the present disclosure. In practical applications, two or more first UEs and two or more relay UEs may be included. The communication system shown in FIG. 1 includes a first UE 102 and a relay UE 102.

It should be noted that the technical solutions of embodiments of the present disclosure may be applied to various communication systems. For example: a long term evolution (LTE) system, a 5th generation (5G) mobile communication system, a 5G new radio (NR) system, or other new future mobile communication systems and the like.

The first UE 101 and the relay UE 102 in embodiments of the present disclosure are entities on a user side for receiving or transmitting signals, such as a mobile phone. The terminal device may also be referred to as a terminal, a user equipment (UE), a mobile station (MS), a mobile terminal (MT) and the like. The terminal device may be an automobile with a communication function, a smart automobile, a mobile phone, a wearable device, a Pad, a computer with a wireless transceiving function, a virtual reality (VR) terminal device, an augmented reality (AR) terminal device, a wireless terminal device in industrial control, and a wireless terminal device in self-driving, a wireless terminal device in remote medical surgery, a wireless terminal device in smart grid, a wireless terminal device in transportation safety, a wireless terminal device in smart city, a wireless terminal device in smart home and the like. The specific technology and specific device form adopted by the terminal device are not limited in the embodiments of the present disclosure.

It may be understood that the communication system described in embodiments of the present disclosure is for a purpose of more clearly illustrating the technical solution of embodiments of the present disclosure, which does not constitute a limitation on the technical solutions provided by the embodiments of the present disclosure. Moreover, it is known by those skilled in the art that the technical solutions provided by the embodiments of the present disclosure are also applicable to similar technical problems with the evolution of the system architecture and the emergence of new business scenarios.

The method and the device for selecting the relay user equipment (UE) in the UE-to-UE relay scenario provided by the present disclosure are described in detail below with reference to the accompanying drawings.

Referring to FIG. 2, which is a flow chart illustrating a method for selecting a relay UE in a UE-to-UE relay scenario provided by an embodiment of the present disclosure. The method is performed by a first UE. As shown in FIG. 2, the method may include, but is not limited to, the following steps.

In step S201, at least one first message sent by at least one relay UE is received.

In step S202, sidelink reference signal receiving power (SL-RSRP) and/or sidelink-discovery reference signal receiving power (SD-RSRP) between the first UE and the at least one relay UE are obtained.

As an example, the first UE obtains the SL-RSRP between the first UE and the at least one relay UE.

As another example, the first UE obtains the SD-RSRP between the first UE and the at least one relay UE.

As yet another example, the first UE obtains the SL-RSRP and the SD-RSRP between the first UE and the at least one relay UE.

In step S203, a target relay UE is selected from the at least one relay UE according to the SL-RSRP or the SD-RSRP obtained and a preconfigured threshold.

In embodiments of the present disclosure, the preconfigured threshold may be configured by a network device, or may be pre-configured.

As an example, the first UE may obtain the preconfigured threshold based on a dedicated radio resource control (RRC) signaling or a signaling in band (SIB) sent by the network device.

As another example, different preconfigured thresholds may be configured for different relay service codes (RSCs) in advance, and the relay UE may carry different RSCs according to actual situations in a case of sending the first message, such that the first UE may select a corresponding preconfigured threshold based on an RSC in the first message.

By implementing embodiments of the present disclosure, the first UE may select the target relay UE from the at least one relay UE according to the SL-RSRP or the SD-RSRP obtained and the preconfigured threshold, thereby solving a problem that the first UE may not select a suitable target relay UE from multiple relay UEs in the UE-to-UE relay scenario.

In an implementation of embodiments of the present disclosure, the first UE may determine at least one candidate relay UE from the at least one relay UE according to a preset relay selection condition, and select one candidate relay UE from the at least one candidate relay UE to determine as the target relay UE. As an example, referring to FIG. 3, which is a flow chart illustrating another method for selecting a relay UE in a UE-to-UE relay scenario provided by an embodiment of the present disclosure. The method is performed by a first UE. As shown in FIG. 3, the method may include, but is not limited to, the following steps.

In step S301, at least one first message sent by at least one relay UE is received.

In step S302, SL-RSRP and/or SD-RSRP between the first UE and the at least one relay UE are obtained.

In step S303, at least one candidate relay UE is determined from the at least one relay UE according to the SL-RSRP or the SD-RSRP obtained and a preconfigured threshold.

In an optional implementation of embodiments of the present disclosure, the preconfigured threshold includes a first preconfigured threshold and/or a second preconfigured threshold, in which the first preconfigured threshold is a minimum threshold and the second preconfigured threshold is a maximum threshold.

As an example, the preconfigured threshold includes the first preconfigured threshold, which is a minimum threshold of the SL-RSRP or the SD-RSRP.

As another example, the preconfigured threshold includes the second preconfigured threshold, which is a maximum threshold of the SL-RSRP or the SD-RSRP.

As yet another example, the preconfigured threshold includes the first preconfigured threshold and the second preconfigured threshold, in which the first preconfigured threshold is the minimum threshold of the SL-RSRP or the SD-RSRP, and the second preconfigured threshold is the maximum threshold of the SL-RSRP or the SD-RSRP.

Optionally, the preconfigured threshold is the first preconfigured threshold; and determining the at least one candidate relay UE from the at least one relay UE according to the SL-RSRP or the SD-RSRP obtained and the preconfigured threshold includes: comparing the SL-RSRP or the SD-RSRP obtained with the first preconfigured threshold, and determining one or more relay UEs satisfying a first candidate relay selection condition from the at least one relay UE; and determining the one or more relay UEs satisfying the first candidate relay selection condition as the at least one candidate relay UE; in which the one or more relay UEs satisfying the first candidate relay selection condition include: one or more relay UEs whose the SL-RSRP or the SD-RSRP with the first UE being greater than or equal to the first preconfigured threshold; or one or more relay UEs whose the SL-RSRP or the SD-RSRP with the first UE being greater than the first preconfigured threshold by at least one hysteresis parameter value.

Example 1, taking the SL-RSRP obtained by the first UE between the first UE and the at least one relay UE as an example, the first UE compares the SL-RSRP obtained corresponding to each relay UE with the first preconfigured threshold, and determines one or more relay UEs corresponding to the SL-RSRP greater than or equal to the first preconfigured threshold as candidate relay UEs.

Example 2, taking the SD-RSRP obtained by the first UE between the first UE and the at least one relay UE as an example, the first UE compares the SD-RSRP obtained corresponding to each relay UE with the first preconfigured threshold, and determines one or more relay UEs corresponding to the SD-RSRP greater than or equal to the first preconfigured threshold as the candidate relay UEs.

Example 3, taking the SL-RSRP and the SD-RSRP obtained by the first UE between the first UE and the at least one relay UE as an example, the first UE may randomly select one from the SL-RSRP and the SD-RSRP based on the implementation, and perform the same procedure as in Example 1 or Example 2 above according to the result of the random selection.

Example 4, taking the SL-RSRP obtained by the first UE between the first UE and the at least one relay UE as an example, the first UE compares the SL-RSRP obtained corresponding to each relay UE with the first preconfigured threshold, and determines one or more relay UEs corresponding to the SL-RSRP greater than the first preconfigured threshold by a preset hysteresis or even greater as the candidate relay UEs.

Example 5, taking the SD-RSRP obtained by the first UE between the first UE and the at least one relay UE as an example, the first UE compares the SD-RSRP obtained corresponding to each relay UE with the first preconfigured threshold, and determines one or more relay UEs corresponding to the SD-RSRP greater than or equal to the first preconfigured threshold by the preset hysteresis or even greater as the candidate relay UEs.

Example 6, taking the SL-RSRP and the SD-RSRP obtained by the first UE between the first UE and the at least one relay UE as an example, the first UE may randomly select one from the SL-RSRP and the SD-RSRP based on the implementation, and perform the same procedure as in Example 4 or Example 5 above according to the result of the random selection.

In another optional implementation of embodiments of the present disclosure, the preconfigured threshold is the second preconfigured threshold; and determining the at least one candidate relay UE from the at least one relay UE according to the SL-RSRP or the SD-RSRP obtained and the preconfigured threshold may include: comparing the SL-RSRP or the SD-RSRP obtained with the second preconfigured threshold, and determining one or more relay UEs satisfying a second candidate relay selection condition from the at least one relay UE; and determining the one or more relay UEs satisfying the second candidate relay selection condition as the at least one candidate relay UE; in which the one or more relay UEs satisfying the second candidate relay selection condition include: one or more relay UEs whose the SL-RSRP or the SD-RSRP with the first UE being less than or equal to the second preconfigured threshold; or one or more relay UEs whose the SL-RSRP or the SD-RSRP with the first UE being less than the second preconfigured threshold by at least one hysteresis parameter value.

Example 7, taking the SL-RSRP obtained by the first UE between the first UE and the at least one relay UE as an example, the first UE compares the SL-RSRP obtained corresponding to each relay UE with the second preconfigured threshold, and determines one or more relay UEs corresponding to the SL-RSRP less than or equal to the second preconfigured threshold as the candidate relay UEs.

Example 8, taking the SD-RSRP obtained by the first UE between the first UE and the at least one relay UE as an example, the first UE compares the SD-RSRP obtained corresponding to each relay UE with the second preconfigured threshold, and determines one or more relay UEs corresponding to the SD-RSRP less than or equal to the second preconfigured threshold as the candidate relay UEs.

Example 9, taking the SL-RSRP and the SD-RSRP obtained by the first UE between the first UE and the at least one relay UE as an example, the first UE may randomly select one from the SL-RSRP and the SD-RSRP based on the implementation, and perform the same procedure as in Example 7 or Example 8 above according to the result of the random selection.

Example 10, taking the SL-RSRP obtained by the first UE between the first UE and the at least one relay UE as an example, the first UE compares the SL-RSRP obtained corresponding to each relay UE with the second preconfigured threshold, and determines one or more relay UEs corresponding to the SL-RSRP less than the second preconfigured threshold by the preset hysteresis or even less as the candidate relay UEs.

Example 11, taking the SD-RSRP obtained by the first UE between the first UE and the at least one relay UE as an example, the first UE compares the SD-RSRP obtained corresponding to each relay UE with the second preconfigured threshold, and determines one or more relay UEs corresponding to the SD-RSRP less than the second preconfigured threshold by the preset hysteresis or even less as the candidate relay UEs.

Example 12, taking the SL-RSRP and the SD-RSRP obtained by the first UE between the first UE and the at least one relay UE as an example, the first UE may randomly select one from the SL-RSRP and the SD-RSRP based on the implementation, and perform the same procedure as in Example 10 or Example 11 above according to the result of the random selection.

In yet another optional implementation of embodiments of the present disclosure, the preconfigured threshold includes the first preconfigured threshold and the second preconfigured threshold; and determining the at least one candidate relay UE from the at least one relay UE according to the SL-RSRP or the SD-RSRP obtained and the preconfigured threshold includes: comparing the SL-RSRP or the SD-RSRP obtained with the first preconfigured threshold and the second preconfigured threshold, and determining one or more relay UEs satisfying a third candidate relay selection condition from the at least one relay UE; and determining the one or more relay UEs satisfying the third candidate relay selection condition as the at least one candidate relay UE; in which the one or more relay UEs satisfying the third candidate relay selection condition include: one or more relay UEs whose the SL-RSRP or the SD-RSRP with the first UE being greater than or equal to the first preconfigured threshold and less than or equal to the second preconfigured threshold; or one or more relay UEs whose the SL-RSRP or the SD-RSRP with the first UE being greater than the first preconfigured threshold by at least one hysteresis parameter value and less than the second preconfigured threshold by at least one hysteresis parameter value.

It should be noted that, in embodiments of the present disclosure, a hysteresis parameter value corresponding to the first threshold may be the same or different from a hysteresis parameter value corresponding to the second threshold. Being greater than the first preconfigured threshold by at least one hysteresis parameter value means being greater than the first preconfigured threshold by a preset hysteresis or greater; and being less than the second preconfigured threshold by at least one hysteresis parameter value means being less than the second preconfigured threshold by a preset hysteresis or less.

Example 13, taking the SL-RSRP obtained by the first UE between the first UE and the at least one relay UE as an example, the first UE compares the SL-RSRP obtained corresponding to each relay UE with the first preconfigured threshold and the second preconfigured threshold, and determines one or more relay UEs corresponding to the SL-RSRP greater than or equal to the first preconfigured threshold and less than or equal to the second preconfigured threshold as the candidate relay UEs.

Example 14, taking the SD-RSRP obtained by the first UE between the first UE and the at least one relay UE as an example, the first UE compares the SD-RSRP obtained corresponding to each relay UE with the first preconfigured threshold and the second preconfigured threshold, and determines one or more relay UEs corresponding to the SD-RSRP greater than or equal to the first preconfigured threshold and less than or equal to the second preconfigured threshold as the candidate relay UEs.

Example 15, taking the SL-RSRP and the SD-RSRP obtained by the first UE between the first UE and the at least one relay UE as an example, the first UE may randomly select one from the SL-RSRP and the SD-RSRP based on the implementation, and perform the same procedure as in Example 13 or Example 14 above according to the result of the random selection.

Example 16, taking the SL-RSRP obtained by the first UE between the first UE and the at least one relay UE as an example, the first UE compares the SL-RSRP obtained corresponding to each relay UE with the first preconfigured threshold and the second preconfigured threshold, and determines one or more relay UEs corresponding to the SL-RSRP greater than the first preconfigured threshold by the at least one hysteresis parameter value and less than the second preconfigured threshold by the at least one hysteresis parameter value as the candidate relay UEs.

Example 17, taking the SD-RSRP obtained by the first UE between the first UE and the at least one relay UE as an example, the first UE compares the SD-RSRP obtained corresponding to each relay UE with the first preconfigured threshold and the second preconfigured threshold, and determines one or more relay UEs corresponding to the SD-RSRP greater than the first preconfigured threshold by the at least one hysteresis parameter value and less than the second preconfigured threshold by the at least one hysteresis parameter value as the candidate relay UEs.

Example 18, taking the SL-RSRP and the SD-RSRP obtained by the first UE between the first UE and the at least one relay UE as an example, the first UE may randomly select one from the SL-RSRP and the SD-RSRP based on the implementation, and perform the same procedure as in Example 16 or Example 17 above according to the result of the random selection.

In step S303, one candidate relay UE is selected from the at least one candidate relay UE to determine as the target relay UE.

For example, the first UE selects one candidate relay UE with highest communication efficiency from the at least one candidate relay UE to determine as the target relay UE.

In an optional implementation, selecting one candidate relay UE from the at least one candidate relay UE to determine as the target relay UE includes: selecting a candidate relay UE with highest SL-RSRP or SD-RSRP with the first UE from the at least one candidate relay UE to determine as the target relay UE; or randomly selecting one candidate relay UE from the at least one candidate relay UE to determine as the target relay UE.

Example 19, taking the SL-RSRP obtained by the first UE between the first UE and the at least one relay UE as an example, the first UE selects the candidate relay UE with the highest SL-RSRP with the first UE to determine as the target relay UE.

Example 20, taking the SD-RSRP obtained by the first UE between the first UE and the at least one relay UE as an example, the first UE selects the candidate relay UE with the highest SD-RSRP with the first UE to determine as the target relay UE.

Example 21, taking the SL-RSRP and the SD-RSRP obtained by the first UE between the first UE and the at least one relay UE as an example, the first UE may randomly select one from the SL-RSRP and the SD-RSRP based on the implementation, and perform the same procedure as in Example 19 or Example 20 above according to the result of the random selection.

Example 22, based on the implementation, the first UE randomly selects one candidate relay UE from the at least one candidate relay UE to determine as the target relay UE.

By implementing embodiments of the present disclosure, the first UE may select the target relay UE from the at least one relay UE according to the SL-RSRP or the SD-RSRP obtained and the preconfigured threshold, thereby solving a problem that the first UE may not select a suitable target relay UE from the multiple relay UEs in the UE-to-UE relay scenario.

In some embodiments of the present disclosure, in a case where the first UE may not determine at least one candidate relay UE from the at least one relay UE according to the SL-RSRP or the SD-RSRP obtained and the preconfigured threshold, that is, the SL-RSRP or the SD-RSRP corresponding to all the relay UEs does not satisfy the selection condition of any embodiment of the present disclosure compared with the preconfigured threshold, the first UE may determine a relay UE with the highest SL-RSRP or SD-RSRP with the first UE as the target relay UE; or the first UE may select a relay UE with the best communication effect or randomly select a relay UE based on the implementation.

Example 23, taking the SL-RSRP obtained by the first UE between the first UE and the at least one relay UE as an example, in a case where the SL-RSRP corresponding to all the relay UEs does not satisfy the selection condition of any embodiment of the present disclosure compared with the preconfigured threshold, the first UE may determine the relay UE with the highest SL-RSRP with the first UE as the target relay UE.

Example 24, taking the SD-RSRP obtained by the first UE between the first UE and the at least one relay UE as an example, in a case where the SL-RSRP corresponding to all the relay UEs does not satisfy the selection condition of any embodiment of the present disclosure compared with the preconfigured threshold, the first UE may determine the relay UE with the highest SD-RSRP with the first UE as the target relay UE.

Example 25, taking the SL-RSRP and the SD-RSRP obtained by the first UE between the first UE and the at least one relay UE as an example, the first UE may, based on the previous step, randomly select one from the SL-RSRP and the SD-RSRP based on the implementation, and perform the same procedure as in Example 23 or Example 24 above according to the result of the random selection.

By implementing embodiments of the present disclosure, the first user equipment may select a suitable relay UE in a case where it is impossible to determine at least one candidate relay UE from the at least one relay UE according to the SL-RSRP or the SD-RSRP obtained and the preconfigured threshold, thereby solving a problem that the first UE may not select the suitable target relay UE from the multiple relay UEs in the UE-to-UE relay scenario.

In an implementation of embodiments of the present disclosure, the at least one first message sent by the at least one relay UE is at least one notification message broadcast by the at least one relay UE; and the first UE is a proximate user equipment.

In an embodiment of the present disclosure, the proximate user equipment is other UE proximate to a relay UE and needing to communicate through the relay UE in a UE-to-UE relay communication scenario.

For example, the proximate user equipment determines the target relay UE by using at least one notification message broadcast by the at least one relay UE as the first message and using the method for selecting the relay UE in the UE-to-UE relay scenario of any one of embodiments described above.

In an implementation of embodiments of the present disclosure, the at least one first message sent by the at least one relay UE is at least one discovery solicitation message forwarded by the at least one relay UE; and the first UE is a target remote UE.

In an embodiment of the present disclosure, the target remote UE refers to a remote UE that receives data in the UE-to-UE relay communication scenario.

For example, the target remote UE determines the target relay UE by using the at least one discovery solicitation message forwarded by one relay UE as the first message and using the method for selecting the relay UE in the UE-to-UE relay scenario of any one of the embodiments described above.

In an optional implementation, the method for selecting the relay UE in the UE-to-UE relay scenario further includes: generating a discovery response message by the target remote UE according to a discovery solicitation message forwarded by the target relay UE; and forwarding the discovery response message by the target remote UE through the target relay UE.

For example, after determining the target relay UE, the target remote UE generates the discovery response message according to the discovery solicitation message forwarded by the target relay UE, and forwards the discovery response message only through the target relay UE.

In an implementation of embodiments of the present disclosure, the at least one first message sent by the at least one relay UE is the at least one discovery response message forwarded by the at least one relay UE; and the first UE is a source remote UE.

In an embodiment of the present disclosure, the source remote UE refers to a remote UE that sends data in the UE-to-UE relay communication scenario.

For example, the source remote UE determines the target relay UE by using the at least one discovery response message forwarded by the at least one relay UE as the first message and using the method for selecting the relay UE in the UE-to-UE relay scenario of any one of the embodiments described above.

It may be understood that above embodiments describe the implementation of relay UE selection method of embodiments of the present disclosure from the first UE. Embodiments of the present disclosure further propose another method for selecting the relay UE in the UE-to-UE relay scenario, and an implementation of the method will be described below from the relay UE.

Referring to FIG. 4, which is a flow chart illustrating yet another method for selecting a relay UE in a UE-to-UE relay scenario provided by an embodiment of the present disclosure. The method is performed by a relay UE. As shown in FIG. 4, the method may include, but is not limited to, the following steps.

In step S401, a first message is sent to a first UE.

In an embodiment of the present disclosure, the first message is configured to assist the first UE to determine whether to select a second UE as a target relay UE according to SL-RSRP or SD-RSRP obtained between the first UE and the second UE, and a preconfigured threshold. Specific implementations may be implemented in any of the various embodiments of the present disclosure, which is not limited by the embodiments of the present disclosure and will not be described in detail.

In an implementation, the first message is a notification message broadcasted by the second UE; and the first UE is a proximate user equipment.

For example, the second UE sends the notification message to the proximate user equipment by means of broadcasting.

In an implementation, the first message is a discovery solicitation message forwarded by the second UE; and the first UE is a target remote UE.

For example, the second UE forwards the discovery solicitation message received by the second UE to the target remote UE.

In an implementation, the first message is a discovery response message forwarded by the second UE; and the first UE is a source remote UE.

For example, the second UE forwards the discovery response message received by the second UE to the source remote UE.

By implementing embodiments of the present disclosure, the second UE may send the first message to the first UE, such that the first UE may select the target relay UE from at least one relay UE based on the first message, thereby solving a problem that the first UE may not select a suitable target relay UE from multiple relay UEs in the UE-to-UE relay scenario.

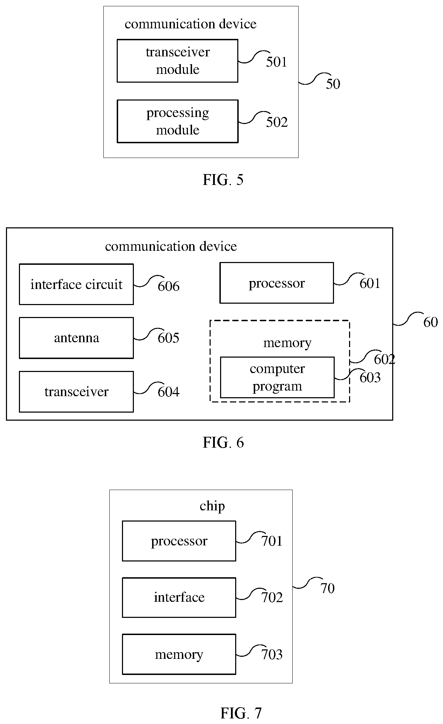

Referring to FIG. 5, which is a structural block diagram illustrating a communication device provided by an embodiment of the present disclosure. The communication device 50 shown in FIG. 5 may include a transceiver module 501 and a processing module 502. The transceiver module 501 may include a sending module and/or a receiving module. The sending module is configured to implement a sending function, and the receiving module is configured to implement a receiving function. The transceiver module 501 may implement a sending function and/or a receiving function.

The communication device 50 may be a first UE, may be a device in the first UE, or may be a device that may be matched for use with the first UE. Alternatively, the communication device 50 may be a second UE, may be a device in the second UE, or may be a device that may be matched for use with the second UE.

The communication device 50 is the first UE: a transceiver module 501 is configured to receive at least one first message sent by at least one relay UE, and obtain SL-RSRP and/or SD-RSRP between the first UE and the at least one relay UE; and a processing module 502 is configured to select a target relay UE from the at least one relay UE according to the SL-RSRP or the SD-RSRP obtained and a preconfigured threshold.

In an implementation, the processing module 502 is further configured to determine at least one candidate relay UE from the at least one relay UE according to the SL-RSRP or the SD-RSRP obtained and the preconfigured threshold; and select one candidate relay UE from the at least one candidate relay UE to determine as the target relay UE.

In an optional implementation, the preconfigured threshold includes a first preconfigured threshold and/or a second preconfigured threshold, in which the first preconfigured threshold is a minimum threshold and the second preconfigured threshold is a maximum threshold.

Optionally, the preconfigured threshold is the first preconfigured threshold; and the processing module 502 is specifically configured to compare the SL-RSRP or the SD-RSRP obtained with the first preconfigured threshold, and determine one or more relay UEs satisfying a first candidate relay selection condition from the at least one relay UE; and determine the one or more relay UEs satisfying the first candidate relay selection condition as the at least one candidate relay UE; in which the one or more relay UEs satisfying the first candidate relay selection condition include: one or more relay UEs whose the SL-RSRP or the SD-RSRP with the first UE being greater than or equal to the first preconfigured threshold; or one or more relay UEs whose the SL-RSRP or the SD-RSRP with the first UE being greater than the first preconfigured threshold by at least one hysteresis parameter value.

Optionally, the preconfigured threshold is the second preconfigured threshold; and the processing module 502 is specifically configured to compare the SL-RSRP or the SD-RSRP obtained with the second preconfigured threshold, and determine one or more relay UEs satisfying a second candidate relay selection condition from the at least one relay UE; and determine the one or more relay UEs satisfying the second candidate relay selection condition as the at least one candidate relay UE; in which the one or more relay UEs satisfying the second candidate relay selection condition include: one or more relay UEs whose the SL-RSRP or the SD-RSRP with the first UE being less than or equal to the second preconfigured threshold; or one or more relay UEs whose the SL-RSRP or the SD-RSRP with the first UE being less than the second preconfigured threshold by at least one hysteresis parameter value.

Optionally, the preconfigured threshold includes the first preconfigured threshold and the second preconfigured threshold; and the processing module 502 is specifically configured to compare the SL-RSRP or the SD-RSRP obtained with the first preconfigured threshold and the second preconfigured threshold, and determine one or more relay UEs satisfying a third candidate relay selection condition from the at least one relay UE; and determine the one or more relay UEs satisfying the third candidate relay selection condition as the at least one candidate relay UE; in which the one or more relay UEs satisfying the third candidate relay selection condition include: one or more relay UEs whose the SL-RSRP or the SD-RSRP with the first UE being greater than or equal to the first preconfigured threshold and less than or equal to the second preconfigured threshold; or one or more relay UEs whose the SL-RSRP or the SD-RSRP with the first UE being greater than the first preconfigured threshold by at least one hysteresis parameter value and less than the second preconfigured threshold by at least one hysteresis parameter value.

In an optional implementation, the processing module 502 is specifically configured to select a candidate relay UE with highest SL-RSRP or SD-RSRP with the first UE from the at least one candidate relay UE to determine as the target relay UE; or randomly select one candidate relay UE from the at least one candidate relay UE to determine as the target relay UE.

In an optional implementation, the processing module 502 is further configured to, in response to none of the at least one relay UE being the candidate relay UE, select a candidate relay UE with highest SL-RSRP or SD-RSRP with the first UE from the at least one candidate relay UE to determine as the target relay UE; or randomly select one candidate relay UE from the at least one candidate relay UE to determine as the target relay UE.

In an implementation, the at least one first message sent by the at least one relay UE is at least one notification message broadcast by the at least one relay UE; and the first UE is a proximate user equipment.

In an implementation, the at least one first message sent by the at least one relay UE is at least one discovery solicitation message forwarded by the at least one relay UE; and the first UE is a target remote UE.

In an optional implementation, the processing module 502 is further configured to generate a discovery response message by the target remote UE according to a discovery solicitation message forwarded by the target relay UE; and the transceiver module 501 is further configured to forward the discovery response message by the target remote UE through the target relay UE.

In an implementation, the at least one first message sent by the at least one relay UE is at least one discovery response message forwarded by the at least one relay UE; and the first UE is a source remote UE.

With the device of embodiments of the present disclosure, the first UE may select the target relay UE from the at least one relay UE according to the SL-RSRP or the SD-RSRP obtained and the preconfigured threshold, thereby solving a problem that the first UE may not select a suitable target relay UE from multiple relay UEs in the UE-to-UE relay scenario.

The communication device 50 is the second UE: a transceiver module 501 is configured to send the first message to the first UE, in which the first message is configured to assist the first UE to determine whether to select the second UE as the target relay UE according to the SL-RSRP or the SD-RSRP obtained between the first UE and the second UE, and the preconfigured threshold.

In an implementation, the first message is a notification message broadcasted by the second UE; and the first UE is a proximate user equipment.

In an implementation, the first message is a discovery solicitation message forwarded by the second UE; and the first UE is a target remote UE.

In an implementation, the first message is a discovery response message forwarded by the second UE; and the first UE is a source remote UE.

With the device of embodiments of the present disclosure, the second UE may send the first message to the first UE, such that the first UE may select the target relay UE from the at least one relay UE based on the first message, thereby solving the problem that the first UE may not select the suitable target relay UE from the multiple relay UEs in the UE-to-UE relay scenario.

Referring to FIG. 6, FIG. 6 is a structural block diagram illustrating another communication device provided by an embodiment of the present disclosure. As shown in FIG. 6, a communication device 60 may be a network device, or a terminal, or a chip, a chip system or a processor supporting the network device to implement the above-mentioned method, or a chip, a chip system or a processor supporting the terminal to implement the above-mentioned method. The communication device 60 may be configured to implement the method as described in the method embodiments described above, with particular reference to the description of the method embodiments described above.

The communication device 60 may include one or more processors 601. The processor 601 may be a general-purpose processor or a special-purpose processor, etc. It may be, for example, a baseband processor or a central processor. The baseband processor may be configured to process a communication protocol and communication data, and the central processor may be configured to control a communication device (such as a base station, a baseband chip, a terminal device, a terminal device chip, a DU or a CU, etc.), execute a computer program and process data of the computer program.

Optionally, the communication device 60 may further include one or more memories 602 on which a computer program 603 may be stored, and the processor 601 executes the computer program 603 to cause the communication device 60 to perform the method as described in the above method embodiments. Optionally, the memory 602 may also have the data stored therein. The communication device 60 and the memory 602 may be provided independently or integrated together.

Optionally, the communication device 60 may further include a transceiver 604 and an antenna 605. The transceiver 604 may be referred to as a transceiving unit, a transceiving machine, or a transceiving circuit or the like for implementing a transceiving function. The transceiver 604 may include a receiver and a transmitter, and the receiver may be referred to as a receiving machine or a receiving circuit or the like for implementing a receiving function; the transmitter may be referred to as a transmitting machine or a transmission circuit or the like for implementing a transmitting function.

Optionally, the communication device 60 may further include one or more interface circuits 606. The interface circuit 606 is configured to receive and transmit the code instructions to the processor 601. The processor 601 executes the code instructions to cause the communication device 60 to perform the method described in the above method embodiments.

The communication device 60 is a first UE: the processor 601 is configured to execute step S202 in FIG. 2, and steps S302 and S303 in FIG. 3. The transceiver 604 is configured to execute step S201 in FIG. 2, step S301 in FIG. 3, and step S401 in FIG. 4.

In an implementation, the processor 601 may include the transceiver for implementing receiving and transmitting functions. For example, the transceiver may be a transceiving circuit, or an interface, or an interface circuit. The transceiving circuit, interface, or interface circuit for implementing the receiving and transmitting functions may be separate or integrated. The transceiving circuit, interface or interface circuit may be configured to read and write code/data, or the transceiving circuit, interface or interface circuit may be configured for transmission or transfer of signal.

In an implementation, the processor 601 may store the computer program that, when run on the processor 601, causes the communication device 60 to perform the method described in the above method embodiments. The computer program may be solidified in the processor 601, in which case the processor 601 may be implemented in hardware.

In an implementation, the communication device 60 may include a circuit that may implement the functions of transmitting or receiving or communication in the foregoing method embodiments. The processor and transceiver described in the present disclosure may be implemented on an integrated circuit (IC), an analog IC, a radio frequency integrated circuit (RFIC), a mixed signal IC, an application specific integrated circuit (ASIC), a printed circuit board (PCB), an electronic device, etc. The processor and transceiver may also be fabricated with various IC process technologies such as complementary metal oxide semiconductor (CMOS), n-metal-oxide-semiconductor (NMOS), positive channel metal oxide semiconductor (PMOS), bipolar junction transistor (BJT), bipolar CMOS (BiCMOS), silicon germanium (SiGe), gallium arsenide (GaAs), etc.

The communication device in the above embodiments may be a network device or a terminal, but the scope of the communication device described in the present disclosure is not limited thereto. Moreover, the structure of the communication device may not be limited by FIG. 6. The communication device may be a stand-alone device or may be a part of a larger device. For example, the communication device may be:
(1) a stand-alone integrated circuit (IC), or a chip, or a chip system or a subsystem;
(2) a collection of one or more ICs, optionally the collection of ICs may also include a storage component for storing the data and the computer program;
(3) ASIC such as modem;
(4) a module that may be embedded in other devices;
(5) a receiver, a terminal device, an intelligent terminal device, a cellular phone, a wireless device, a handset, a mobile unit, an on-vehicle device, a network device, a cloud device, an artificial intelligence device, etc.; or
(6) others.

Regarding a case where the communication device may be the chip or the chip system, reference is made to FIG. 7, which is a structural block diagram illustrating a chip provided by an embodiment of the present disclosure. The chip shown in FIG. 7 includes a processor 701 and an interface 702. There may be one or more processors 701 and a plurality of interfaces 702.

Regarding a case where the chip is configured to realize a function of a first UE in embodiments of the present disclosure:

an interface 702 is configured to receive at least one first message sent by at least one relay UE, and obtain SL-RSRP and/or SD-RSRP between the first UE and the at least one relay UE; and a processor 701 is configured to select a target relay UE from the at least one relay UE according to the SL-RSRP or the SD-RSRP obtained and a preconfigured threshold.

In an implementation, the processor 701 is specifically configured to determine at least one candidate relay UE from the at least one relay UE according to the SL-RSRP or the SD-RSRP obtained and the preconfigured threshold; and select one candidate relay UE from the at least one candidate relay UE to determine as the target relay UE.

In an optional implementation, the preconfigured threshold includes a first preconfigured threshold and/or a second preconfigured threshold, in which the first preconfigured threshold is a minimum threshold and the second preconfigured threshold is a maximum threshold.

Optionally, the preconfigured threshold is the first preconfigured threshold; and the processor 701 is specifically configured to compare the SL-RSRP or the SD-RSRP obtained with the first preconfigured threshold, and determine one or more relay UEs satisfying a first candidate relay selection condition from the at least one relay UE; and determine the one or more relay UEs satisfying the first candidate relay selection condition as the at least one candidate relay UE; in which the one or more relay UEs satisfying the first candidate relay selection condition include: one or more relay UEs whose the SL-RSRP or the SD-RSRP with the first UE being greater than or equal to the first preconfigured threshold; or one or more relay UEs whose the SL-RSRP or the SD-RSRP with the first UE being greater than the first preconfigured threshold by at least one hysteresis parameter value.

Optionally, the preconfigured threshold is the second preconfigured threshold; and processor 701 is specifically configured to compare the SL-RSRP or the SD-RSRP obtained with the second preconfigured threshold, and determine one or more relay UEs satisfying a second candidate relay selection condition from the at least one relay UE; and determine the one or more relay UEs satisfying the second candidate relay selection condition as the at least one candidate relay UE; in which the one or more relay UEs satisfying the second candidate relay selection condition include: one or more relay UEs whose the SL-RSRP or the SD-RSRP with the first UE being less than or equal to the second preconfigured threshold; or one or more relay UEs whose the SL-RSRP or the SD-RSRP with the first UE being less than the second preconfigured threshold by at least one hysteresis parameter value.

Optionally, the preconfigured threshold includes the first preconfigured threshold and the second preconfigured threshold; and the processor 701 is specifically configured to compare the SL-RSRP or the SD-RSRP obtained with the first preconfigured threshold and the second preconfigured threshold, and determine one or more relay UEs satisfying a third candidate relay selection condition from the at least one relay UE; and determine the one or more relay UEs satisfying the third candidate relay selection condition as the at least one candidate relay UE; in which the one or more relay UEs satisfying the third candidate relay selection condition include: one or more relay UEs whose the SL-RSRP or the SD-RSRP with the first UE being greater than or equal to the first preconfigured threshold and less than or equal to the second preconfigured threshold; or one or more relay UEs whose the SL-RSRP or the SD-RSRP with the first UE being greater than the first preconfigured threshold by at least one hysteresis parameter value and less than the second preconfigured threshold by at least one hysteresis parameter value.

In an optional implementation, the processor 701 is specifically configured to select a candidate relay UE with highest SL-RSRP or SD-RSRP with the first UE from the at least one candidate relay UE to determine as the target relay UE; or randomly select one candidate relay UE from the at least one candidate relay UE to determine as the target relay UE.

In an optional implementation, the processor 701 is further configured to, in response to none of the at least one relay UE being the candidate relay UE, select a candidate relay UE with highest SL-RSRP or SD-RSRP with the first UE from the at least one candidate relay UE to determine as the target relay UE; or randomly select one candidate relay UE from the at least one candidate relay UE to determine as the target relay UE.

In an implementation, the at least one first message sent by the at least one relay UE is at least one notification message broadcast by the at least one relay UE; and the first UE is a proximate user equipment.

In an implementation, the at least one first message sent by the at least one relay UE is at least one discovery solicitation message forwarded by the at least one relay UE; and the first UE is a target remote UE.

In an optional implementation, the processor 701 is further configured to generate a discovery response message by the target remote UE according to a discovery solicitation message forwarded by the target relay UE; and the interface 702 is further configured to forward the discovery response message by the target remote UE through the target relay UE.

In an implementation, the at least one first message sent by the at least one relay UE is at least one discovery response message forwarded by the at least one relay UE; and the first UE is a source remote UE.

Regarding a case where the chip is configured to realize a function of a second UE in embodiments of the present disclosure:
an interface 702 is configured to configured to send a first message to a first UE, in which the first message is configured to assist the first UE to determine whether to select the second UE as a target relay UE according to SL-RSRP or SD-RSRP obtained between the first UE and the second UE, and a preconfigured threshold.

In an implementation, the first message is a notification message broadcasted by the second UE; and the first UE is a proximate user equipment.

In an implementation, the first message is a discovery solicitation message forwarded by the second UE; and the first UE is a target remote UE.

In an implementation, the first message is a discovery response message forwarded by the second UE; and the first UE is a source remote UE.

Optionally, the chip further includes a memory 703 for storing necessary computer programs and data.

Those skilled in the art may further appreciate that the various illustrative logical blocks and steps described in the embodiments of the present disclosure may be implemented in electronic hardware, computer software, or combinations of both. Whether such functionality is implemented as hardware or software depends upon particular application and design requirement of the overall system. Those skilled in the art may implement the described functionality in varying ways for each particular application, but such implementation should not be considered to be beyond the scope of protection of the embodiments of the present disclosure.

Embodiments of the present disclosure further provide a system for selecting a relay UE in a UE-to-UE relay scenario, the system including a communication device as a first UE and a communication device as a relay UE in the embodiment of FIG. 5 above, or the system including a communication device as a first UE and a communication device as a relay UE in the embodiment of FIG. 6 above.

The present disclosure further provides a readable storage medium having instructions stored thereon that, when executed by the computer, cause the functions of any of the method embodiments described above to be implemented.

The present disclosure also provides a computer program product that, when executed by the computer, causes the functions of any of the method embodiments described above to be implemented.

In the above embodiments, the present disclosure may be implemented in whole or in part by hardware, software, firmware or their combination. When implemented in software, the present disclosure may be implemented in whole or in part as a computer program product. The computer program product includes one or more computer programs. The computer programs, when loaded and executed on the computer, result in whole or in part in processes or functions according to embodiments of the present disclosure. The computer may be a general-purpose computer, a special-purpose computer, a computer network, or other programmable devices. The computer program may be stored in a computer-readable storage medium or transmitted from one computer-readable storage medium to another, for example, the computer program may be transmitted from one website, computer, server, or data center to another website, computer, server, or data center by wire (e.g. coaxial cable, fiber optic, digital subscriber line (DSL)) or wirelessly (e.g. infrared, wireless, microwave, etc.). The computer-readable storage medium may be any available medium that may be accessed by the computer or a data storage device, such as a server, a data center, etc., that includes one or more available media. The available medium may be a magnetic medium (e.g. a floppy disk, a hard disk, a magnetic tape), an optical medium (e.g. a high-density digital video disc (DVD)), or a semiconductor medium (e.g. a solid state disk (SSD)), etc.

Those skilled in the art may appreciate that the first, second, and other numerical numbers involved in the present disclosure are merely for convenience of description and are not intended to limit the scope of the embodiments of the present disclosure, which also represent a sequential order.

Term "at least one" in the present disclosure may also be described as one or more, and "a plurality of" may be two, three, four, or more, and the present disclosure is not limited thereto. In embodiments of the present disclosure, regarding a type of technical features, the technical features in the type of technical features are distinguished by "first", "second", "third", "A", "B", "C" and "D", etc. and there is no order of precedence or order of magnitude between the technical features described by the "first", "second", "third", "A", "B", "C" and "D".

Correspondence shown in tables in the present disclosure may be configured or preconfigured. Values of information in each table are merely examples, and may be configured as other values, which is not limited in the present disclosure. In a case of configuring the correspondence between the information and each parameter, it is not necessarily required that all the correspondences shown in each table must be configured. For example, the correspondence shown in certain rows in the tables in the present disclosure may not be configured. As another example, appropriate deformation adjustments may be made based on the above table, such as splitting, merging, etc. Names of the parameters shown in titles of the above tables may also be other names understandable by the communication device, and the values or expressions of the parameters may also be other values or expressions understandable by the communication device. The above-mentioned tables may also be implemented using other data structures, for example, an array, a queue, a container, a stack, a linear table, a pointer, a linked list, a tree, a graph, a struct, a class, a heap, or a hash table.

"Preconfigured" in the present disclosure may be understood as defined, pre-defined, stored, pre-stored, pre-negotiated, pre-configured, solidified, or pre-fired.

Those skilled in the art may appreciate that units and algorithm steps of each example described in conjunction with embodiments disclosed herein may be implemented with electronic hardware, or combinations of computer software and electronic hardware. Whether such functionality is implemented in hardware or software depends on the specific application and design constraints of the technical solution. Those skilled in the art may implement the described functionality in varying ways for each particular application, but such implementation should not be considered to be beyond the scope of the present disclosure.

It will be clear to those skilled in the art that, for convenience and brevity of the description, specific working procedures of the above described systems, devices and units may refer to corresponding procedures in the preceding method embodiments and will not be described in detail here.

The above description is only for the specific embodiments of the present disclosure, but the scope of the present disclosure is not limited thereto. Any person skilled in the art may easily think of changes or substitutions within the technical scope of the present disclosure, which shall be covered by the protection scope of the present disclosure. Therefore, the protection scope of the present application shall be in line with the attached claims.

## Claims

1. A method for selecting a relay user equipment (UE) in a UE-to-UE relay scenario, performed by a first UE, comprising:
receiving at least one first message sent by at least one relay UE;
obtaining sidelink reference signal receiving power (SL-RSRP) and/or sidelink-discovery reference signal receiving power (SD-RSRP) between the first UE and the at least one relay UE; and
selecting a target relay UE from the at least one relay UE according to the SL-RSRP or the SD-RSRP obtained and a preconfigured threshold.

2. The method according to claim 1, wherein selecting the target relay UE from the at least one relay UE according to the SL-RSRP or the SD-RSRP obtained and the preconfigured threshold comprises:
determining at least one candidate relay UE from the at least one relay UE according to the SL-RSRP or the SD-RSRP obtained and the preconfigured threshold; and
selecting one candidate relay UE from the at least one candidate relay UE to determine as the target relay UE.

3. The method according to claim 2, wherein the preconfigured threshold comprises a first preconfigured threshold and/or a second preconfigured threshold, wherein the first preconfigured threshold is a minimum threshold and the second preconfigured threshold is a maximum threshold.

4. The method according to claim 3, wherein the preconfigured threshold is the first preconfigured threshold; and determining the at least one candidate relay UE from the at least one relay UE according to the SL-RSRP or the SD-RSRP obtained and the preconfigured threshold comprises:
comparing the SL-RSRP or the SD-RSRP obtained with the first preconfigured threshold, and determining one or more relay UEs satisfying a first candidate relay selection condition from the at least one relay UE; and
determining the one or more relay UEs satisfying the first candidate relay selection condition as the at least one candidate relay UE;
wherein the one or more relay UEs satisfying the first candidate relay selection condition comprise:
one or more relay UEs whose the SL-RSRP or the SD-RSRP with the first UE being greater than or equal to the first preconfigured threshold; or
one or more relay UEs whose the SL-RSRP or the SD-RSRP with the first UE being greater than the first preconfigured threshold by at least one hysteresis parameter value.

5. The method according to claim 3, wherein the preconfigured threshold is the second preconfigured threshold; and determining the at least one candidate relay UE from the at least one relay UE according to the SL-RSRP or the SD-RSRP obtained and the preconfigured threshold comprises:
comparing the SL-RSRP or the SD-RSRP obtained with the second preconfigured threshold, and determining one or more relay UEs satisfying a second candidate relay selection condition from the at least one relay UE; and
determining the one or more relay UEs satisfying the second candidate relay selection condition as the at least one candidate relay UE;
wherein the one or more relay UEs satisfying the second candidate relay selection condition comprise:
one or more relay UEs whose the SL-RSRP or the SD-RSRP with the first UE being less than or equal to the second preconfigured threshold; or
one or more relay UEs whose the SL-RSRP or the SD-RSRP with the first UE being less than the second preconfigured threshold by at least one hysteresis parameter value.

6. The method according to claim 3, wherein the preconfigured threshold comprises the first preconfigured threshold and the second preconfigured threshold; and determining the at least one candidate relay UE from the at least one relay UE according to the SL-RSRP or the SD-RSRP obtained and the preconfigured threshold comprises:
comparing the SL-RSRP or the SD-RSRP obtained with the first preconfigured threshold and the second preconfigured threshold, and determining one or more relay UEs satisfying a third candidate relay selection condition from the at least one relay UE; and
determining the one or more relay UEs satisfying the third candidate relay selection condition as the at least one candidate relay UE;
wherein the one or more relay UEs satisfying the third candidate relay selection condition comprise:
one or more relay UEs whose the SL-RSRP or the SD-RSRP with the first UE being greater than or equal to the first preconfigured threshold and less than or equal to the second preconfigured threshold; or
one or more relay UEs whose the SL-RSRP or the SD-RSRP with the first UE being greater than the first preconfigured threshold by at least one hysteresis parameter value and less than the second preconfigured threshold by at least one hysteresis parameter value.

7. The method according to any one of claims 2 to 6, wherein selecting one candidate relay UE from the at least one candidate relay UE to determine as the target relay UE comprises:
selecting a candidate relay UE with highest SL-RSRP or SD-RSRP with the first UE from the at least one candidate relay UE to determine as the target relay UE; or
randomly selecting one candidate relay UE from the at least one candidate relay UE to determine as the target relay UE.

8. The method according to any one of claims 2 to 7, further comprising:
in response to none of the at least one relay UE being the candidate relay UE, selecting a relay UE with highest SL-RSRP or SD-RSRP with the first UE from the at least one relay UE to determine as the target relay UE; or randomly selecting one relay UE from the at least one relay UE to determine as the target relay UE.

9. The method according to any one of claims 1 to 8, wherein the at least one first message sent by the at least one relay UE is at least one notification message broadcast by the at least one relay UE; and the first UE is a proximate user equipment.

10. The method according to any one of claims 1 to 8, wherein the at least one first message sent by the at least one relay UE is at least one discovery solicitation message forwarded by the at least one relay UE; and the first UE is a target remote UE.

11. The method according to claim 10, further comprising:
generating a discovery response message by the target remote UE according to a discovery solicitation message forwarded by the target relay UE; and
forwarding the discovery response message by the target remote UE through the target relay UE.

12. The method according to any one of claims 1 to 8, wherein the at least one first message sent by the at least one relay UE is at least one discovery response message forwarded by the at least one relay UE; and the first UE is a source remote UE.

13. A method for selecting a relay user equipment (UE) in a UE-to-UE relay scenario, performed by a second UE, the second UE being the relay UE in the UE-to-UE relay scenario, comprising:
sending a first message to a first UE, wherein the first message is configured to assist the first UE to determine whether to select the second UE as a target relay UE according to sidelink reference signal receiving power (SL-RSRP) or sidelink-discovery reference signal receiving power (SD-RSRP) obtained between the first UE and the second UE, and a preconfigured threshold.

14. The method according to claim 13, wherein the first message is a notification message broadcasted by the second UE; and the first UE is a proximate user equipment.

15. The method according to claim 13, wherein the first message is a discovery solicitation message forwarded by the second UE; and the first UE is a target remote UE.

16. The method according to claim 13, wherein the first message is a discovery response message forwarded by the second UE; and the first UE is a source remote UE.

17. A communication device, comprising:
a transceiver module configured to receive at least one first message sent by at least one relay UE; and
a processing module configured to obtain sidelink reference signal receiving power (SL-RSRP) and/or sidelink-discovery reference signal receiving power (SD-RSRP) between the first UE and the at least one relay UE; and select a target relay UE from the at least one relay UE according to the SL-RSRP or the SD-RSRP obtained and a preconfigured threshold.

18. A communication device, comprising:
a transceiver module configured to send a first message to a first UE, wherein the first message is configured to assist the first UE to determine whether to select a second UE as a target relay UE according to sidelink reference signal receiving power (SL-RSRP) and/or sidelink-discovery reference signal receiving power (SD-RSRP) obtained between the first UE and the second UE, and a preconfigured threshold.

19. A communication device, comprising:
a processor; and
a memory,
wherein the memory is configured to store a computer program, and the processor is configured to execute the computer program stored in the memory to cause the device to perform the method according to any one of claims 1 to 12 or 13 to 16.

20. A computer-readable storage medium, configured to store instructions that, when executed, cause the method according to any one of claims 1 to 12 or 13 to 16 to be implemented.
